# EUROPEAN PATENT SPECIFICATION

(11) **EP 3 048 247 B1**
(45) Date of publication and mention of the grant of the patent: **10.06.2020**
(21) Application number: 16151951.7
(22) Date of filing: 19.01.2016
(51) Int. Cl.: F01D 5/02, F02C 6/12, F01D 5/04, F02C 3/04, F01D 5/12

(54) **INFLOW RADIAL TURBINE WITH REDUCED BORE STRESS CONCENTRATION**
ZUSTROMRADIALTURBINE MIT REDUZIERTER BOHRUNGSSPANNUNGSDICHTE
TURBINE D'ADMISSION RADIALE AVEC RÉDUCTION DE CONCENTRATION DE CONTRAINTES D'ALÉSAGE

(30) Priority: 20.01.2015 US 201514600390
(43) Date of publication of application: 27.07.2016
(73) Proprietor: United Technologies Corporation, Farmington, CT 06032 (US)
(72) Inventor: DUONG, Loc Quang, San Diego, CA 92127 (US); HU, Xiaolan, San Diego, CA 92130 (US); BARKLEY, Robert O., San Diego, CA 85757 (US); YANG, Gao, San Diego, CA 92129 (US)
(74) Representative: Dehns

(56) References cited:
- EP-A1- 2 476 861
- EP-A2- 1 394 387
- WO-A1-2014/008117
- US-A- 4 565 505

## Description

### FIELD OF INVENTION

The present disclosure relates to gas turbine engines, and, more specifically, to an overhung radial turbine with an improved bore geometry.

### BACKGROUND

Gas turbine engines may operate with rotors spinning at high angular velocities and at high temperatures. The high angular velocities and high temperatures may result in harsh conditions. For example, the rotor of a radial turbine may rotate at approximately 100,000 revolutions per minute (RPM). Overhung rotors having deep bores may lead to excessive stress at the bore end.

Traditionally, overhung rotors may have a hemispherical contour. The hemispherical contour may result in a singularity at the center of the bore end where stress is concentrated. The high stress concentration at the bore end may result in plastic deformation. Plastic deformation at the bore end may result in rotor imbalance over time and a reduction in burst margin. As a consequence, an engine with an overhung rotor may be at high risk of premature mission termination.

A prior art gas turbine engine having the features of the preamble to claim 1 is disclosed in WO 2014/008117 A1 and in EP 2 476 861 A1.

### SUMMARY

The present invention provides a gas turbine engine in accordance with claim 1.

In various embodiments, the radius of curvature of the radial section may be 0.54 to 0.56 times the radius of the bore. The radius of the flat bore end may be 0.44 to 0.46 times the radius of the bore. A ratio of the radius of curvature of the radial section over the radius of the flat bore end may be 1.174 to 1.273.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a cross-sectional view of an exemplary gas turbine engine, in accordance with various embodiments;
FIG. 2 illustrates an inflow radial turbine having a disk with a bore configured to reduce stress, in accordance with various embodiments; and
FIG. 3 illustrates the geometry of a disk bore with reduces stress concentrations at high angular velocity, in accordance with the present invention.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The scope of the disclosure is defined by the appended claims. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

As used herein, "distal" refers to the direction radially outward, or generally, away from the axis of rotation of a turbine engine. As used herein, "proximal" refers to a direction radially inward, or generally, towards the axis of rotation of a turbine engine.

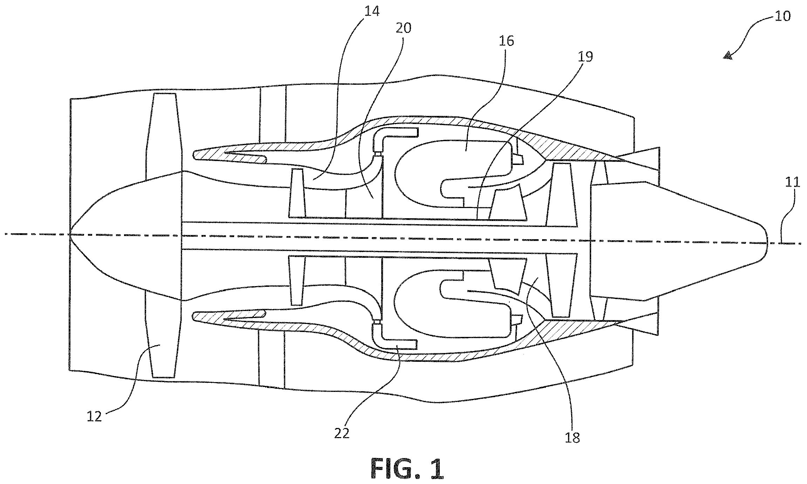

Referring to FIG. 1, an exemplary illustration of a gas turbine engine 10 is shown according to various embodiments. Gas turbine engine 10 may comprise a fan 12 through which ambient air is propelled and a centrifugal compressor 14 for pressurizing the air. A combustor 16 may be disposed aft of centrifugal compressor 14 (also referred to herein as an impeller). The compressed air is mixed with fuel and ignited in the combustor, generating an annular stream of hot combustion gases. A turbine 18 is aft of the combustor 16 and is also mechanically coupled to centrifugal compressor 14 through shaft 19. Turbine 18 extracts energy from the combusted gases exiting combustor 16. In various embodiments, one or more of the previous components, such as fan 12, may not be present as in the case of propulsion applications, for example.

Various components of gas turbine engine 10 may rotate about axis of rotation 11. The centrifugal compressor 14 may comprise centrifugal impeller 20 which directs the pressurized air into diffuser vanes 22. The forward and aft positions of gas turbine engine 10 may be described relatively along axis of rotation 11. For example, fan 12 may be referred to as forward of turbine 18 and turbine 18 may be referred to as aft of fan 12. As air flows from fan 12 to the more aft components of gas turbine engine 10, axis of rotation 11 may also generally define the net direction of the air stream flow. However, the direction of the air stream flow may vary through the individual components. For example, the air flow may be radial in an exducer section of centrifugal impeller 20. The present disclosure is applicable to other types of turbine engines, such as auxiliary power units, turbo-shaft units, turbo-jet units, and turbo-prop units.

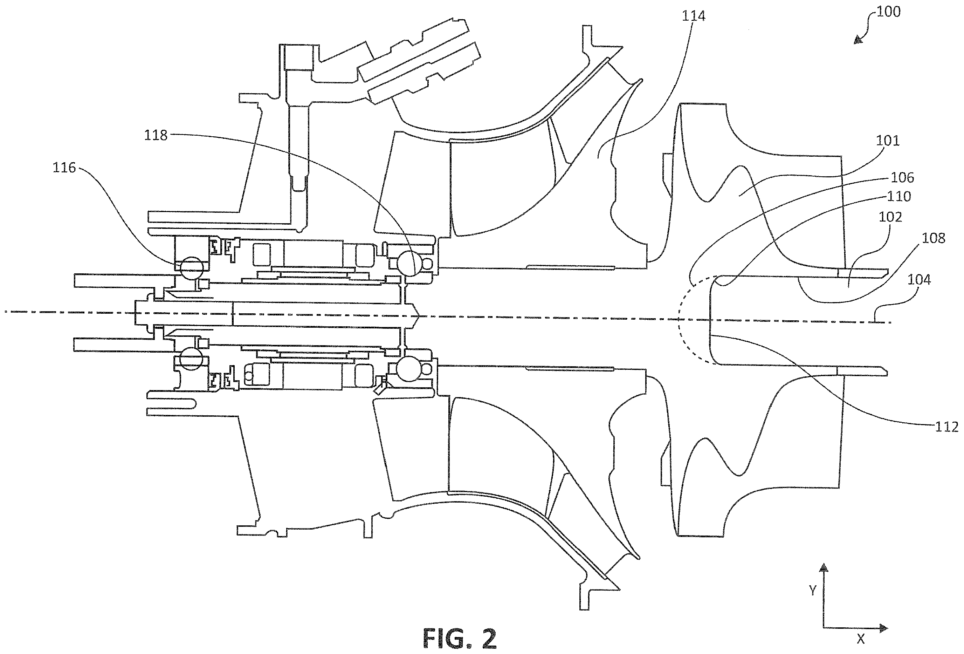

With reference to FIG. 2, a cross-sectional view of an impeller and radial turbine assembly 100 configured to rotate about axis 104 is shown, in accordance with various embodiments. An xy axis is shown for convenience. Impeller and radial turbine assembly 100 comprises radial turbine disk 101 aft of impeller 114 with bore 102 formed partially through a proximal region of radial turbine disk 101. Bore 102 comprises a cylindrical segment 108 aft of, and tangentially continuous with, radial segment 110. Cylindrical segment 108 may extend in the x direction from bore end 112 to form an overhanging portion of radial turbine disk 101. Radial segment 110 is aft of, and tangentially continuous with bore end 112. In that regard, bore 102 terminates at a flat, circular segment defining bore end 112. Impeller 114 and radial turbine disk 101 may be coupled to aft bearing 118 and forward bearing 116. Ghosted line 106 represents what would be a radial bore end to emphasize that bore end 112 having a flat geometry and radial segment 110 have a different curvature from one another.

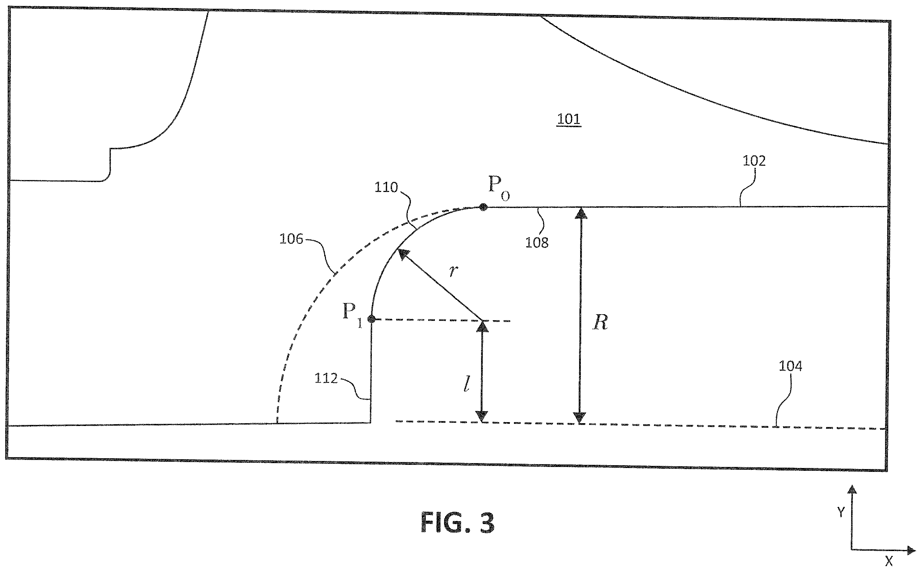

With reference to FIG. 3, a cross-sectional view of radial turbine disk 101 with bore 102 is shown, in accordance with various embodiments. Axis 104 is shown central to radial turbine disk 101 and bore 102. Bore 102 may be axially symmetric about axis 104. A cylindrical wall of bore 102 extends from an aft-most point of radial turbine disk 101 in an axial direction (i.e., the x direction) to point P0. Point P0 may represent a circular boundary (if P0 were rotated about axis 104) between cylindrical segment 108 and radial segment (also referred to herein as a curved segment). Radial segment 110 begins at point P0 and extends to point P1. Radial segment 110 is tangentially continuous in the x direction with cylindrical segment 108 at point P0. Radial segment 110 is also tangentially continuous with bore end 112 at point P1. Point P1 may represent a circular boundary (if P1 were rotated about axis 104) between radial segment 110 and bore end 112. Bore end 112 extend from point P1 to axis 104. The structure of bore 102 as depicted may be rotated about axis 104 to define the complete geometry of bore 102.

In various embodiments, bore 102 may comprise a radius R. Radius R is also equal to the distance of point P0 from axis 104. Bore 102 may have a substantially similar radius R throughout the length of cylindrical segment 108. Radial segment 110 has a radius of curvature r that continues through an arc of approximately 90°. Thus, the arc length of radial segment 110 as depicted is equal to 1/2πr. Radial segment 110 may terminate at point P0 where bore end 112 begins.

Bore end 112 has a radius 1. Bore end 112 is a substantially planar (i.e., flat) surface with a circular perimeter defined by rotating radius 1 about axis 104. Thus, the radius R of bore 102 is equal to the sum of radius of curvature r of radial segment 110 and radius 1 of bore end 112. Ghosted line 106 serves to emphasize the difference in geometry between a single radial bore as shown by ghosted line 106 and bore 102 comprising bore end 112 and radial segment 110.

In various embodiments, the stress characteristics of bore 102 may be optimized by maintaining relationships between bore radius R, radius of curvature r, and radius 1. For example, radius of curvature r of radial segment 110 may be 0.54 to 0.56 times radius R of bore 102 (i.e., 0.54R ≤ r ≤ 0.56R). Radius 1 of bore end 112 may also be 0.44 to 0.46 times radius R of bore 102 (i.e., 0.44R ≤ 1 ≤ 0.46R). A ratio of a radius of curvature of the radial section over a radius of the flat bore end may be 1.174 to 1.273 (i.e., 1.174 ≤ r/l ≤ 1.273). A ratio of a radius of curvature of the radial section over a radius of the flat bore end may also be 0.75 to 2.0 (i.e., 0.75 ≤ r/l ≤ 2.0). Bore end 112 having a flat contour may reduce stress concentrations in bore at a central point in bore end. In various embodiments, stress concentrations may be reduced 25% or more by using the geometry of bore 102 instead of the geometry depicted by ghosted line 106. The geometry of bore 102 may limit the stress concentration at bore end 112 and thereby limit plastic deformation of radial turbine disk 101.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A gas turbine engine (10), comprising:
an impeller (114) configured to rotate about an axis (104);
a combustor (16) in fluid communication with the impeller (114); and
an inflow radial turbine aft of the impeller (114) and in fluid communication with the combustor (16), the inflow radial turbine comprising a rotor with a bore (102) having a flat bore end (112) and a radial section (110) aft of the flat bore end (112); wherein:
the flat bore end (112) is a substantially planar surface with a circular perimeter defined by a radius (1) about the axis (104);
the radial section (110) is tangentially continuous with the flat bore end (112);
the radial section (110) extends through an arc of 90 degrees; and
the radius of curvature (r) of the radial section (110) plus the radius (1) of the flat bore end (112) equals a radius (R) of the bore (102); **characterised in that**
the radius of curvature (r) of the radial section (110) is greater than the radius (1) of the flat bore end (112).

2. The gas turbine engine of claim 1, wherein the radius of curvature (r) of the radial section (110) is 0.54 to 0.56 times the radius (R) of the bore (102).

3. The gas turbine engine of claim 1 or 2, wherein the radius (1) of the flat bore end (112) is 0.44 to 0.46 times the radius (R) of the bore (102).

4. The gas turbine engine of any preceding claim, wherein a ratio of the radius of curvature (r) of the radial section (110) over the radius (1) of the flat bore end (112) is 1.174 to 1.273.

## Patentansprüche

1. Gasturbinentriebwerk (10), umfassend:
ein Schaufelrad (114), das dazu konfiguriert ist, sich um eine Achse (104) zu drehen;
eine Brennkammer (16) in Fluidkommunikation mit dem Schaufelrad (114); und
eine Radialturbine hinter dem Schaufelrad (114) und in Fluidkommunikation mit der Brennkammer (16), wobei die Radialturbine einen Rotor mit einer Bohrung (102) umfasst, die ein flaches Bohrungsende (112) und einen radialen Abschnitt (110) hinter dem flachen Bohrungsende (112) aufweist; wobei: das flache Bohrungsende (112) eine im Wesentlichen plane Fläche mit einem kreisförmigen Umfang, der durch einen Radius (1) um die Achse (104) definiert ist, ist;
der radiale Abschnitt (110) mit dem flachen Bohrungsende (112) tangential kontinuierlich ist;
der radiale Abschnitt (110) durch einen Bogen von 90 Grad verläuft; und
der Krümmungsradius (r) des radialen Abschnitts (110) plus den Radius (1) des flachen Bohrungsendes (112) gleich einem Radius (R) der Bohrung (102) ist; **dadurch gekennzeichnet, dass** der Krümmungsradius (r) des radialen Abschnitts (110) größer als der Radius (1) des flachen Bohrungsendes (112) ist.

2. Gasturbinentriebwerk nach Anspruch 1, wobei der Krümmungsradius (r) des radialen Abschnitts (110) 0,54- bis 0,56-mal der Radius (R) der Bohrung (102) ist.

3. Gasturbinentriebwerk nach Anspruch 1 oder 2, wobei der Radius (1) des flachen Bohrungsendes (112) 0,44- bis 0,46-mal der Radius (R) der Bohrung (102) ist.

4. Gasturbinentriebwerk nach einem der vorstehenden Ansprüche, wobei ein Verhältnis des Krümmungsradius (r) des radialen Abschnitts (110) zum Radius (1) des flachen Bohrungsendes (112) 1,174 bis 1,273 beträgt.

## Revendications

1. Moteur à turbine à gaz (10), comprenant :
une roue à aubes (114) configurée pour tourner autour d'un axe (104) ;
une chambre de combustion (16) en communication fluidique avec la roue à aubes (114) ; et
une turbine d'admission radiale à l'arrière de la roue à aubes (114) et en communication fluidique avec la chambre de combustion (16), la turbine d'admission radiale comprenant un rotor avec un alésage (102) ayant une extrémité d'alésage plate (112) et une section radiale (110) à l'arrière de l'extrémité d'alésage plate (112) ; dans lequel :
l'extrémité d'alésage plate (112) est une surface sensiblement plane avec un périmètre circulaire défini par un rayon (1) autour de l'axe (104) ;
la section radiale (110) est tangentiellement continue avec l'extrémité d'alésage plate (112) ;
la section radiale (110) s'étend à travers un arc de 90 degrés ; et
le rayon de courbure (r) de la section radiale (110) ajouté au rayon (1) de l'extrémité d'alésage plate (112) est égale à un rayon (R) de l'alésage (102) ; **caractérisé en ce que**
le rayon de courbure (r) de la section radiale (110) est supérieure au rayon (1) de l'extrémité d'alésage plate (112).

2. Moteur à turbine à gaz selon la revendication 1, dans lequel le rayon de courbure (r) de la section radiale (110) représente 0,54 à 0,56 fois le rayon (R) de l'alésage (102).

3. Moteur à turbine à gaz selon la revendication 1 ou 2, dans lequel le rayon (1) de l'extrémité d'alésage plate (112) représente 0,44 à 0,46 fois le rayon (R) de l'alésage (102).

4. Moteur à turbine à gaz selon une quelconque revendication précédente, dans lequel un rapport entre le rayon de courbure (r) de la section radiale (110) et le rayon (1) de l'extrémité d'alésage plate (112) est de 1,174 à 1,273.
